# EUROPÄISCHE PATENTANMELDUNG

(11) **EP 1 120 876 A1**
(43) Veröffentlichungstag der Anmeldung: **01.08.2001**
(21) Anmeldenummer: 00125743.5
(22) Anmeldetag: 24.11.2000
(51) Int. Cl.: H02G 3/22, F16L 5/02, F16L 5/10

(54) **Dichtpackung zum Hindurchführen von Leitungen durch eine Wand**

(30) Priorität: 26.01.2000 DE 10003144
(71) Anmelder: Hauff-Technik GmbH & Co. KG, 89542 Herbrechtingen (DE)
(72) Erfinder: Heck, Martin, 89447 Zöschingen (DE)
(74) Vertreter: Weitzel, Wolfgang, Dr.-Ing. Patentanwalt

(57) **Zusammenfassung**

Die Erfindung betrifft eine Dichtpackung zum Hindurchführen von Leitungen wie Kabeln, Rohrleitungen, durch eine Wandöffnung;
mit einem Schutzrohr;
mit wenigstens einem Montagerahmen an einem der beiden Enden des Schutzrohres;
der Montagerahmen umfaßt einen Rohrstutzen zum Verschachteln mit dem Schutzrohr, ferner eine Platte, die zum Rohrstutzen senkrecht verläuft und die in eingebautem Zustand an der betreffenden Wandfläche anliegt;
es ist eine ringförmige Dichtung vorgesehen, die in zusammengebautem Zustand von Schutzrohr und Rohrstutzen die Innenfläche des einen dieser beiden Elemente gegen die Außenfläche des anderen dieser beiden Elemente abdichtet;
der Dichtring ist in eine Ringnut in einem der beiden Elemente eingelegt;
der Dichtring hat - in einem achssenkrechten Schnitt gesehen - die Form einer Pfeilspitze;
die Pfeilspitze ist in dem sie tragenden Element derart angeordnet, dass der Dichtring einem Lösen der beiden Elemente in eingebautem Zustand entgegenwirkt;
die beim Zusammenbau aneinander gleitenden Flächen sind mit einem leicht flüchtigen Schmiermittel geschmiert.

## Beschreibung

Die Erfindung betrifft eine Dichtpackung zum Hindurchführen von Leitungen, wie Kabeln, Rohrleitungen durch eine Betonwand. Auf DE 29 01 268 B1, DE 24 11 613 1 und CH 664 237 A5 wird verwiesen.

Derartige Dichtpackungen umfassen als wesentliches Element ein Schutzrohr, das in eingebautem Zustand an der Laibung der Betonwand eng anliegt. Wenigstens an einem Ende des Schutzrohres ist ein Montagerahmen angeschlossen, der sich im Bereich der betreffenden Wandfläche befindet und mit seinem Ringflansch im allgemeinen an der Wandfläche anliegt.

Zur Dichtpackung gehört mindestens ein Deckel, der an den betreffenden Montagerahmen angeschlossen wird, im allgemeinen mittels eines Bajonettverschlusses. Der Deckel ist jedoch nicht Gegenstand der Erfindung.

Die Dichtpackung wird in der Praxis vormontiert, das heißt Schutzrohr und Montagerahmen werden zusammengefügt. Sodann wird diese Einheit in die Schalung der Betonwand an der entsprechenden Stelle eingelegt und vergossen. Sodann wird der Deckel mit den hindurchgeführten Leitungen wie Kabeln oder dergleichen mit dem Montagerahmen verbunden. Da die Betonwände unterschiedliche Stärken haben, muß auch das Schutzrohr unterschiedliche Längen aufweisen. Es muß somit für den jeweiligen Anwendungsfall dimensioniert werden. Beim Schutzrohr geht es aber nicht nur um dessen Länge. Es muß auch mit entsprechenden Vorkehrungen versehen werden, damit es mit dem Rohrstutzen, der Bestandteil des Montagerahmens ist, verankert werden kann.

Der Erfindung liegt die Aufgabe zugrunde, eine solche Dichtpackung derart zu gestalten, dass die mit unterschiedlichen Wandstärken verbundenen Probleme vereinfacht werden.

Diese Aufgabe wird durch die Merkmale von Anspruch 1 gelöst.

Demgemäß wird eine ringförmige Dichtung vorgesehen, die in zusammengebautem Zustand von Schutzrohr und Rohrstutzen die Innenfläche des einen dieser beiden Elemente gegen die Außenfläche des anderen abdichtet. Die Dichtung ist dabei in eine Ringnut im einen der beiden Elemente eingelegt. Die Dichtung hat - in einem achssenkrechten Schnitt gesehen - die Form einer Pfeilspitze. Die Pfeilspitze ist derart angeordnet, dass die Dichtung einer Zugkraft entgegenwirkt, die den Rohrstutzen vom Schutzrohr trennen will. Dabei ist es notwendig, dass beim Zusammenbau die aneinander gleitenden Flächen ein leicht flüchtiges Schmiermittel tragen, um überhaupt ein Überschieben des einen Elementes über die betreffende Fläche des Dichtringes zu ermöglichen.

Die Erfindung ist anhand der Zeichnung näher erläutert. Darin ist im einzelnen folgendes dargestellt:
- Fig. 1: zeigt in schematischer Darstellung eine Dichtpackung, die in eine Wandöffnung eingebaut ist.
- Fig. 2: zeigt in vergrößertem Maßstab einen Dichtring, der in die Nut eines Montagerahmens eingesetzt ist.
- Fig. 3: zeigt den Gegenstand von Figur 2 bei montiertem Schutzrohr.
- Fig. 4: veranschaulicht in stark vergrößerter Darstellung den Vorgang des Montierens.

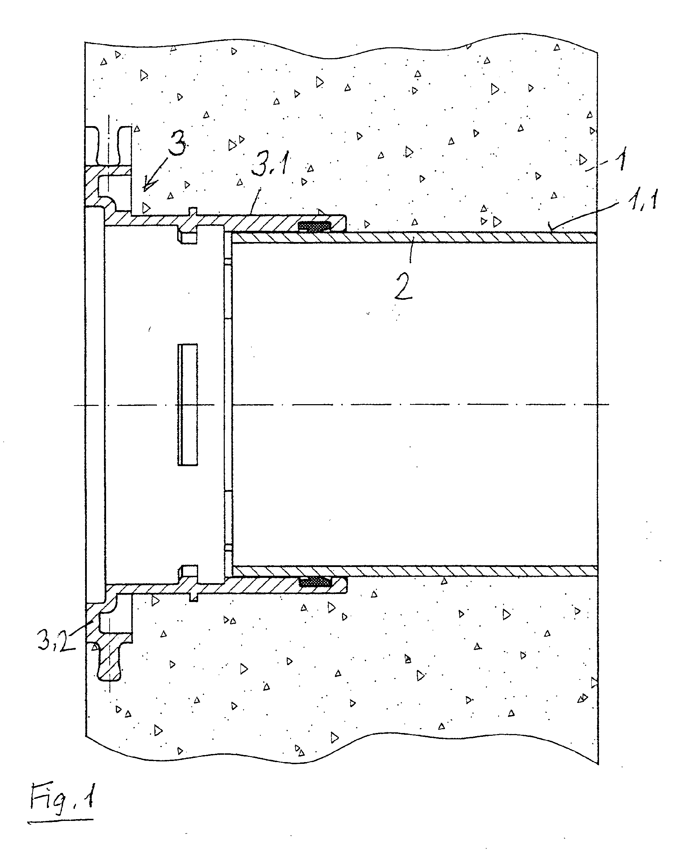

In Figur 1 erkennt man eine Wand 1 mit einer Wandöffnung 1.1. In die Wandöffnung 1.1 ist die Dichtpackung eingegossen, umfassend ein Schutzrohr 2 sowie einen Montagerahmen 3. Der Montagerahmen 3 umfaßt einen Rohrstutzen 3.1 sowie eine Platte 3.2. Der Montagerahmen 3 ist im allgemeinen ein Kunststoff-Spritzgußteil.

Der Rohrstutzen 3.1 weist eine Nut auf. In die Nut ist eine Dichtung eingelegt, was noch im einzelnen nachstehend behandelt werden soll.

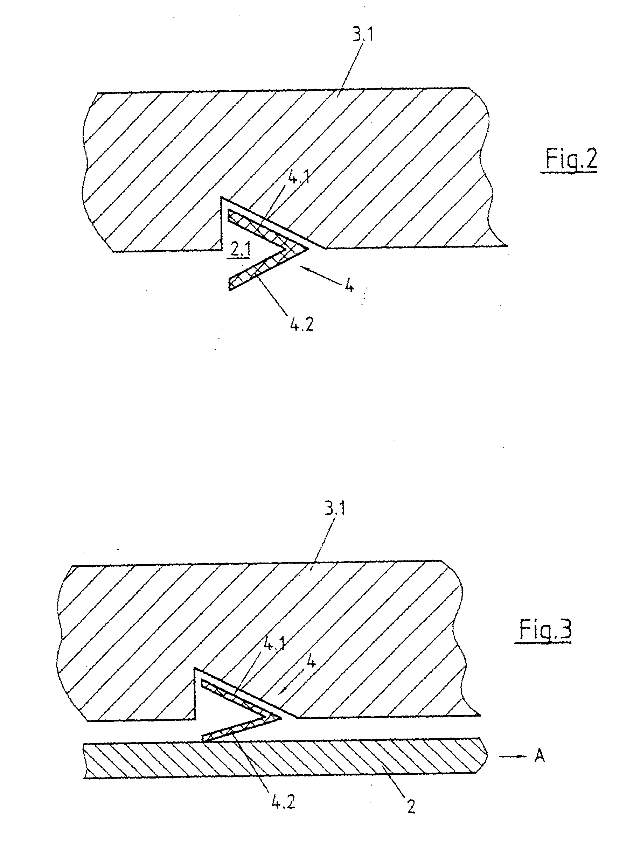

Figur 2 zeigt in vergrößerter Darstellung den Rohrstutzen 3.1 mit der genannten Nut 2.1 und mit eingelegter Pfeildichtung 4. Die Pfeildichtung weist zwei Schenkel 4.1, 4.2 auf. Der Pfeil ist etwas gespreizt; d.h. die beiden Schenkel 4.1, 4.2 bilden einen relativ großen Winkel miteinander.

In Figur 3 erkennt man wiederum den Rohrstutzen 3.1 mit der Pfeildichtung 4, aber auch das Schutzrohr 2. Der eine Schenkel 4.2 der Pfeildichtung 4 greift nunmehr in die Innenfläche des Schutzrohres 2 ein. Würde auf das Schutzrohr 2 ein Zug in Richtung des Pfeiles A ausgeübt, so würde sich der Schenkel 4.2 mit der inneren Mantelfläche des Schutzrohres 2 verkrallen und eine Trennung von Schutzrohr 2 und Rohrstutzen 3.1 verhindern.

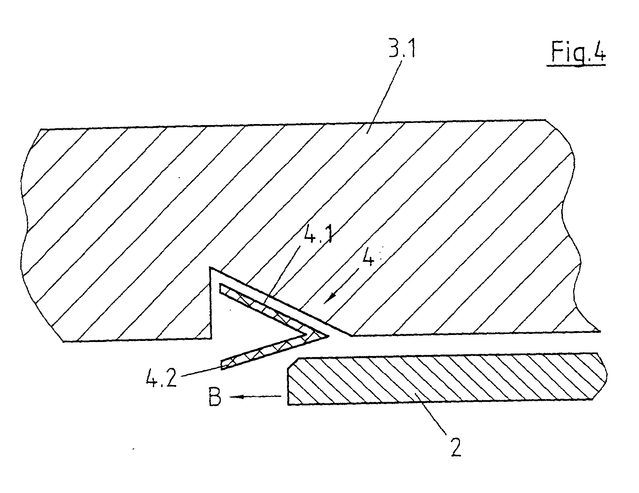

Figur 4 veranschaulicht den Vorgang des Montierens. Schutzrohr 2 wird in Richtung des Pfeiles B verschoben, um über den äußeren Schenkel 4.2 des Pfeiles 4 zu gleiten. Dabei sind die beteiligten Flächen mit einem leicht flüchtigen Schmiermittel versehen, um ein Aufschieben überhaupt ermöglichen zu können.

Wie man sieht, ist die Nut 2.1 derart gestaltet, dass der radial innere Schenkel satt am Nutgrund anliegt. Dies muß jedoch nicht so sein. Die Nut könnte auch rechteckigen Querschnitt haben.

Aufgrund der erfindungsgemäßen Gestaltung der Dichtpackung ist nunmehr folgendes möglich: Das Schutzrohr braucht nicht mehr auf Maß angeliefert zu werden. Der Kunde kann es sich je nach Mauerstärke auf das notwendige Maß ablängen. Er kann Rohre als Meterware lagern, die nur den richtigen Durchmesser haben müssen.

## Patentansprüche

1. Dichtpackung zum Hindurchführen von Leitungen wie Kabeln, Rohrleitungen, durch eine Wandöffnung (1.1);
1.1 mit einem Schutzrohr (2);
1.2 mit wenigstens einem Montagerahmen (3) an einem der beiden Enden des Schutzrohres (2);
1.3 der Montagerahmen (3) umfaßt einen Rohrstutzen (3.1) zum Verschachteln mit dem Schutzrohr (2), ferner eine Platte (3.2), die zum Rohrstutzen (3.1) senkrecht verläuft und die in eingebautem Zustand an der betreffenden Wandfläche anliegt;
1.4 es ist eine ringförmige Dichtung (4) vorgesehen, die in zusammengebautem Zustand von Schutzrohr (2) und Rohrstutzen (3.1) die Innenfläche des einen dieser beiden Elemente gegen die Außenfläche des anderen dieser beiden Elemente abdichtet;
1.5 der Dichtring (4) ist in eine Ringnut (2.1) in einem der beiden Elemente eingelegt;
1.6 der Dichtring (4) hat - in einem achssenkrechten Schnitt gesehen - die Form einer Pfeilspitze;
1.7 die Pfeilspitze ist in dem sie tragenden Element derart angeordnet, dass der Dichtring (4) einem Lösen der beiden Elemente in eingebautem Zustand entgegenwirkt;

2. Dichtpackung nach Anspruch 1, dadurch gekennzeichnet, dass die Nut (2.1) im Rohrstutzen (3.1) vorgesehen ist.
